**Europäisches Patentamt**

**European Patent Office**

**Office européen des brevets**

(19)

(11) Publication number: **0 030 420**
A1

# EUROPEAN PATENT APPLICATION

(12)

(21) Application number: **80304017.9**

(22) Date of filing: **11.11.80**

(51) Int. Cl.³: **H 02 G 3/24**

(30) Priority: **22.11.79 GB 7940405**
**04.08.80 GB 8025329**

(43) Date of publication of application: **17.06.81**
**Bulletin 81/24**

(84) Designated Contracting States: **AT BE CH DE FR GB IT LI LU NL SE**

(71) Applicant: **Henry Lindsay Limited, Lindsay House Saltaire Road, Shipley, West Yorkshire BD18 3HJ (GB)**

(72) Inventor: **Atkin, Howard Stuart, 22 Lidgett Hill, Leeds West Yorkshire (GB)**
Inventor: **Alderton, Gordon Henry Scott, 1 Priory Grove, Bingley West Yorkshire (GB)**
Inventor: **Geoffrey, Gordon Hanson, Spring Cottage Pool Bank Pool-in-Wharfedale, Otley West Yorkshire (GB)**

(74) Representative: **Orr, William Maclean et al, Haseltine Lake & Co Hazlitt House 28 Southampton Buildings Chancery Lane, London WC2A 1AT (GB)**

(54) **Holder for cable or other elongate articles.**

(57) A holder for an elongate article, such as an electric cable, comprises a fixing portion (10) by means of which the holder may be attached to a supporting structure e.g. a tunnel wall, and a holder portion (11) formed in the shape of a helix and through which the cable can extend to be held thereby.

Holder for cable or other elongate articles

This invention relates to a holder for cable or other elongate articles.

There are many known devices for supporting elongate articles to fixed structures such as walls or rooves, and such devices are usually of rigid construction which have to be assembled about the elongate articles e.g. a two-part clamping device which is assembled about an elongate article, such as a pipe, by tightening a threaded fastener which draws the two parts of the clamping device together to hold and support the pipe.

The clamping operation may be carried out at ground level, and then the pipe and the clamping device are offered up to the required position on a fixed support structure, so that the clamping device may be firmly secured to the support structure. Alternatively, the clamping device is first secured to the fixed structure , and then the pipe is offered up to the clamping device so that the clamping operation takes place in situ. In either case, the mounting in position of the pipe on the fixed structure is an awkward and time consuming operation.

Accordingly, there is a need to provide a holder for holding and supporting elongate articles on a fixed structure which is simpler and quicker to operate than hitherto. This is desirable generally in order to reduce labour costs in many different situations, but is particularly necessary for working environments in which only minimal interruption to operation of existing equipment can be tolerated. An example of such an environment is an existing road or rail tunnel which has a traffic loading which can only be interrupted for short periods. Thus, it may be desired to install new cable systems along the wall of an underground railway tunnel in which the only time available is between the last night train and the first early morning train.

One embodiment of the present invention has been developed specifically to provide a holder which will facilitate the installation of an electrical cable along the wall of an underground railway tunnel, in which it is essential that the holder should have no metallic parts in contact with the cable. However, it should be understood that the invention is not limited exclusively to use in such an environment, and is applicable generally to providing a holding and supporting function for elongate articles.

According to the invention , there is provided a holder for an elongate article, said holder comprising a fixing portion by means of which the holder may be attached to a supporting structure, and a holder portion formed in the shape of a helix and through which the elongate article can extend to be held thereby.

In one embodiment, the holder portion is resiliently deformable to enable the holder portion to be wrapped around the circumference of the elongate article, and subsequently, by its own inherent resilience, to revert or tend to revert to its original helical shape in order to hold and support the elongate article therein.

Depending upon the required extent of "grip" of the helical holder portion on the elongate article, the diameter of the passage (for the elongate article) defined by the helical portion in its relaxed state will be selected in relation to the cross-section of the elongate article.

0030420

The holder portion may be made of any suitable resiliently deformable material, though plastics material, such as nylon, is preferred. When the holder portion is made of plastics material, the holder is particularly suitable for holding electrical cable, the use of which requires that there should be no metallic support for the cable. One example of such a cable is the BICC radiating cable or "leaky feeder" which is used in underground railway systems in the United Kingdom.

Preferably, the fixing portion extends generally radially of the (helical) holder portion and, at its end remote from the holder portion, is adapted for securement to a supporting structure so that a cable can be spaced from the supporting structure.

Conveniently, the fixing portion is made of the same material as the holder portion, so that they may be formed in one piece.

When the holder is intended for use in an underground railway tunnel, it is preferred that a separate support is provided which is securable to the wall of the tunnel and to which the holder is detachably connected to said end remote from the holder portion.

Some existing underground railway tunnels in this country have walls formed by circular cast iron tunnel sections which are bolted together. Adjacent sections have radially inwardly extending ribs which are joined together by bolts which extend axially through aligned holes in the ribs. Bearing in mind that interruption of the existing train timetable should be avoided or kept to the absolute minimum, it is desirable that a means should be provided whereby the supports of the holders according to the invention can be secured to the tunnel sections quickly and preferably without any preparatory work being necessary.

To this end, each support may be generally U-shaped in construction so as to embrace a pair of adjoining ribs of two adjacent tunnel sections, the limbs of the support being resiliently displaceable away from each other to allow the support to be fitted over the adjoining ribs and subsequently springing back towards the initial configuration in order to grip the ribs therebetween. To improve the retention in position of the support, it is preferred that an eyelet be provided on the support which is positioned and dimensioned so as to fit over the head or the nut of a bolt which is joining the two ribs together.

Thus, the support can be readily applied to the ribs, and secured in position, without the necessity to carry out any preparatory work.

The fixing portion of the holder may be pivotally connected to said support so as to vary the inclination of the fixing portion relative to the support, and hence the position of the holder portion which is to hold the cable.

The pivotal connection may comprise a threaded fastener taken through said remote end of the fixing portion and through an eyelet formed in the web of the U-shaped configuration of the support. At the remote end of the fixing portion, there may be provided a series of peripherally spaced notches into which can be received adjustably a part of the web so as to lock the fixing portion in any desired position. The notches may be so spaced as to provide, say. angular adjustment of

0030420

the fixing portion through increments of 45°.

In a second embodiment, the support (which is detachably connected to the end of the fixing portion remote from the resilient helical holder portion) comprises a wire support having an eyelet at each end, one eyelet fitting over the threaded fastener which pivotally connects the fixing portion to the support and the other eyelet serving to attach the holder to a fixed supporting structure e.g. a tunnel wall via a securing bolt on which said other eyelet is fitted.

The securing bolt may be fixed to the tunnel wall by drilling a hole in the tunnel wall, putting fixing resin into the hole, and inserting the bolt into the resin-filled hole to function as an anchor bolt.

The wire support may include an intermediate portion which extends transversely of the threaded fastener over a distance equal to the required spacing of the holder from the tunnel wall , and end portions which extend perpendicular to the intermediate portion and each of which terminates in a respective eyelet.

According to a third embodiment, the helical holder portion is of relatively rigid construction, e.g. made of steel. When the elongate article to be supported is flexible e.g. an electrical conductor, the pitch of the turns of the helix may be sufficient to allow the elongate article to be wound into the helical holder. Alternatively, when the passage defined by the helix is slightly larger than the cross section of the elongate article, the latter may be taken axially through the holder. This would be suitable when, for example, the elongate article is a rigid pipe or conduit.

0030420

To enable the third embodiment to be secured to a supporting structure via the flange of a beam e.g. a channel, angle or I-beam, the support may comprise a U-shaped clamp having a pair of fixed jaws which embrace the flange, and a threaded adjuster mounted on one of the jaws and adjustable to engage one side of the flange and to press the other of the jaws into engagement with the other side of the flange.

The fixing portion may comprise a radially extending element attached, preferably integrally, to the helical holder portion, the element being taken through a passage formed in the base of the U-shaped clamp. Alternatively, the fixing portion may comprise a bolt taken through the passage, and an eyelet formed at an end of a radial extension of the helical holder portion to be secured to a projecting end of the bolt.

As a modification to the third embodiment, the helical holder portion may be resiliently deformable, as in the first and second embodiments. Conversely, the resiliently deformable helical holder portion of the first and second embodiments may be of rigid construction, as in the third embodiment.

In a fourth embodiment, the support comprises a beam, preferably an angle beam, which is securable to a supporting structure e.g. a tunnel wall, via a resin anchor bolt as mentioned above, and the fixing portion comprises a threaded end of a radial extension of the helical holder portion, which is taken through a flange of the angle beam and is secured by nuts on each side of the flange.

Embodiments of holder according to the invention will now be described in detail, by way of example only, with reference to the accompanying drawings in which:-

Figure 1 is a side view of a first embodiment of holder ;

Figure 2 is an end view of the holder;

Figure 3 is a side view of a second embodiment of holder;

Figure 4 is an end view of the second embodiment;

Figure 5 is a side view of a third embodiment;

Figure 6 is an end view of the third embodiment;

Figure 7 is an end view of a modification to the third embodiment;

Figure 8 is a side view of the modification;

Figure 9 is an end view of a fourth embodiment of holder;   and

Figure 10 is a side view of the fourth embodiment.

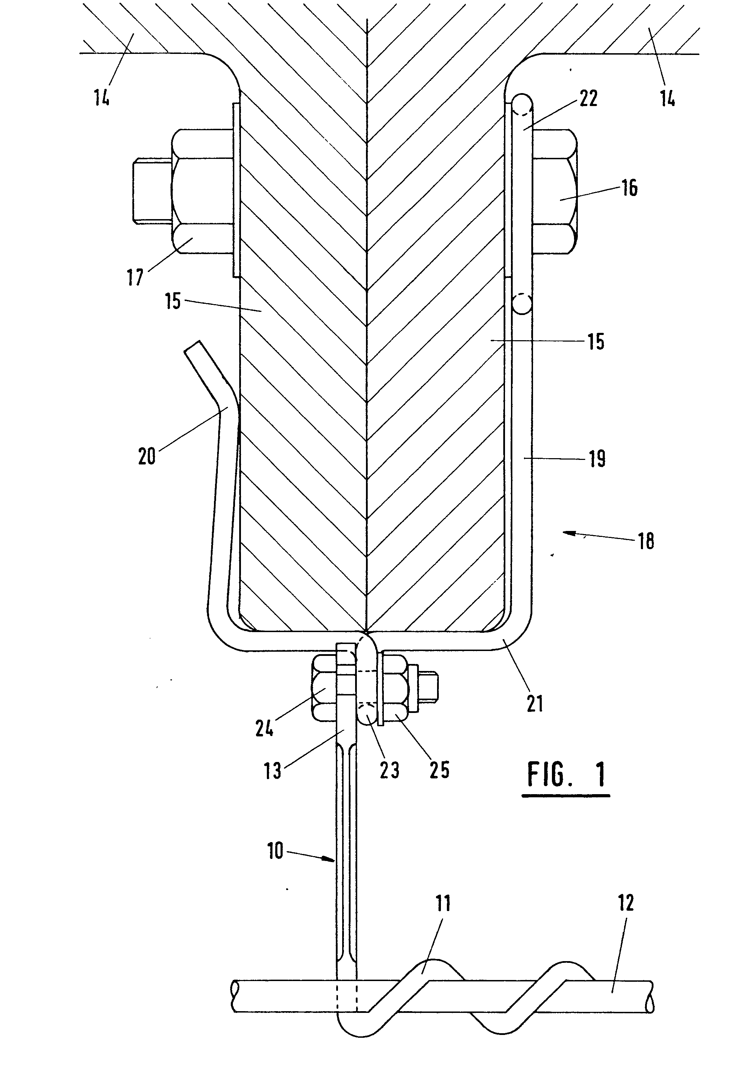

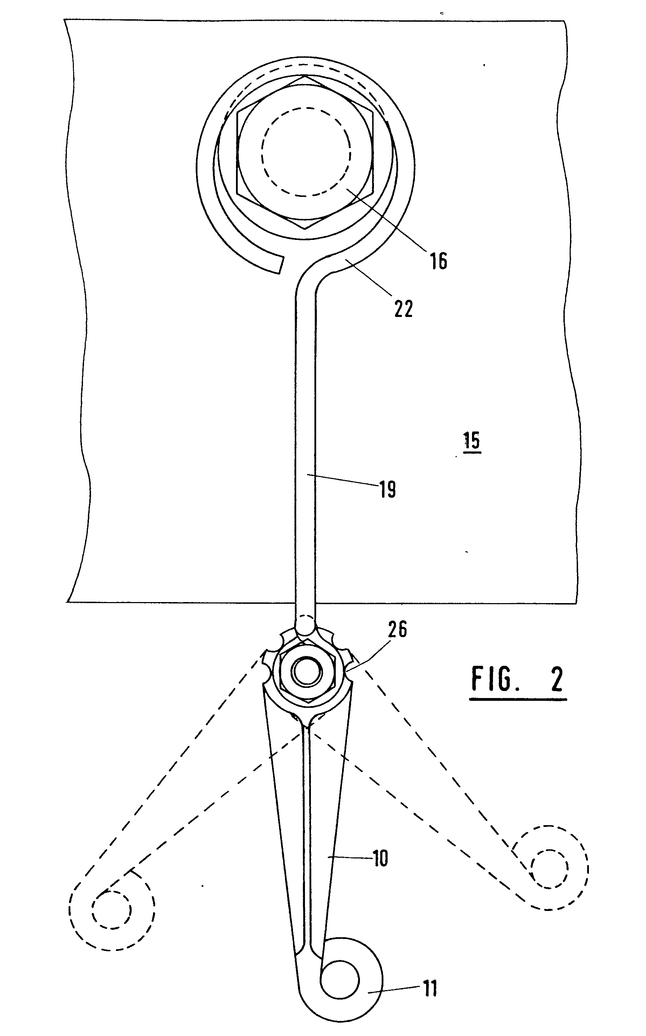

Referring now to Figures 1 and 2 of the drawings, there is shown a holder for holding and supporting cable or other elongate articles, the holder being adapted to be secured to a fixed supporting structure in order to mount the elongate article on the supporting structure.

0030420

The holder will be described and illustrated for use in an underground railway tunnel, but it should be understood that this is by way of example only, and that the holder may be used in many other environments in which it is necessary to hold and support an elongate article, such as a cable , pipe, conduit or rope.

The holder comprsies a fixing portion 10 by means of which the holder may be attached to a fixed supporting structure, and a holder portion 11 formed in the shape of a helix in order to allow passage therethrough of an elongate article. As illustrated, the elongate article takes the form of an electrical cable 12, which may comprise a BICC radiating cable or "leaky feeder". Cables of this type are used in underground railway systems.

The holder portion 11 is made of resiliently deformable material to enable the holder portion to be wrapped around the circumference  of the cable 12 and subsequently, by its own inherent resilience, to revert or tend to revert to its original helical shape in order to hold and support the cable 12 therein. The preferred material for the holder portion 11 is plastics material, particularly nylon. This will ensure that the holder has

no metallic support for the cable 12, which is essential for cable of this type.

The fixing portion 10 extends generally radially of the helical holder portion 11 and, at its end 13 remote from the holder portion 11, is adapted for securement to a supporting structure so that the cable 12 can be supported in spaced relationship from the supporting structure. The fixing portion 10 is made from the same material as the holder portion 11, so that they may be formed in one piece.

As illustrated, the holder is used in an underground railway tunnel in order to mount the cable 12 along the wall of the tunnel. The wall of the tunnel is formed by cast iron tunnel sections 14 which have radially inwardly extending ribs 15 which are bolted together. As shown, a bolt having a head 16 is taken axially through aligned holes in the ribs 15, and has a nut 17 applied thereon.

The illustrated embodiment of holder according to the invention has been designed specifically for use in existing underground railway tunnels, and particularly with a view to enabling quick and easy mounting of the holder on the tunnel wall. This is necessary in order to avoid, or minimise interruption to the existing railway time table. As will be described below, the holder can be mounted in position quickly, by a simple manual manipulation, without the necessity for any preparatory work to be carried out on the tunnel wall.

To this end, the holder includes a separate support 18 which has a detachable connection with the end 13 of the fixing portion 10 and which is U-shaped in construction so as to embrace the adjoining ribs 15 of two adjacent tunnel sections. The support 18 has a pair of limbs 19 and 20 which are joined by a web 21, and the limbs 19 and 20 are resiliently displaceable away from each other to allow the support 18 to be fitted over the adjoining ribs 15. Subsequently, the limbs 19 and 20 spring back towards their initial configuration in order to grip the ribs 15 therebetween. Evidently, in the relaxed position (not shown) of the support 18, the limbs 19 and 20 will converge.

To improve the retention in position of the support 18, an eyelet 22 is provided at the end of the limb 19 and is positioned and dimensioned so as to fit over the head 16 of the bolt which is joining the ribs 15 together. Thus, the support 18 can be readily applied to the ribs 15, and secured in position without the necessity to carry out any preparatory work.

However, it would be possible, and within the scope of the invention, for the support 18 to be mounted in position on the ribs 15 by other means. Thus, by way of example, holes could be drilled through the ribs 15, into which securing bolts could be taken in order to secure one or both of the limbs 19, 20 to the ribs 15. Alternatively, the existing bolts joining the ribs 15 together could be removed, and then re-inserted, or fresh bolts used, after being taken through suitable mountings in one or both of the limbs 19, 20. Nevertheless, the illustrated arrangement is the preferred arrangement, since it avoids any of the necessity for preparatory work.

The fixing portion 10 is pivotally connected at its end 13 to the web 21 of the support 18, by means of a threaded fastener which is taken through a hole in the end 13 and through an eyelet 23 provided in the web 21 of the support 18. As illustrated, the threaded fastener comprises a bolt 24 and nut 25.

The fixing portion 10 is pivotally adjustable about the axis of the bolt 24 and the eyelet 23, so that the position of the holder portion 11, and hence the cable 12, can be adjusted to any desired position relative to the wall of the tunnel. To provide increments of adjustment movement, the end 13 of the fixing portion 10 has a series of five peripherally spaced notches 26 into which can be received adjustably a part of the web 21 of the support 18, so as to lock the fixing portion 10 in any desired position. The notches are spaced so as to provide angular adjustment of the fixing portion through increments of 45°. In Figure 2, a median position of the fixing portion 10 is illustrated in solid lines, and two dotted outlines illustrate the range of angular adjustment which is possible.

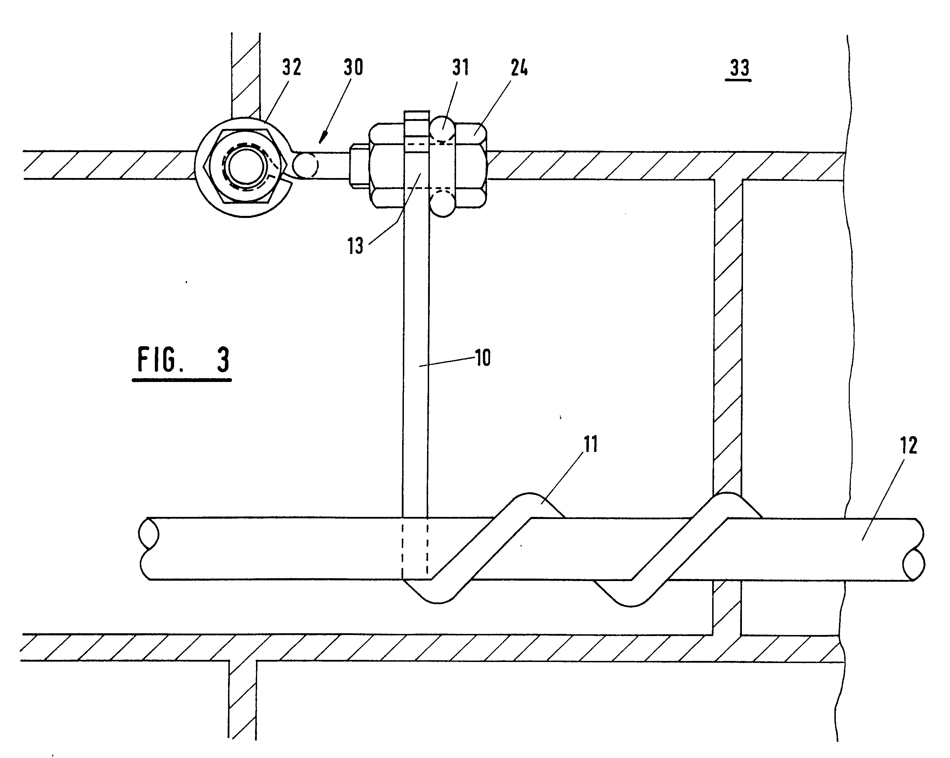

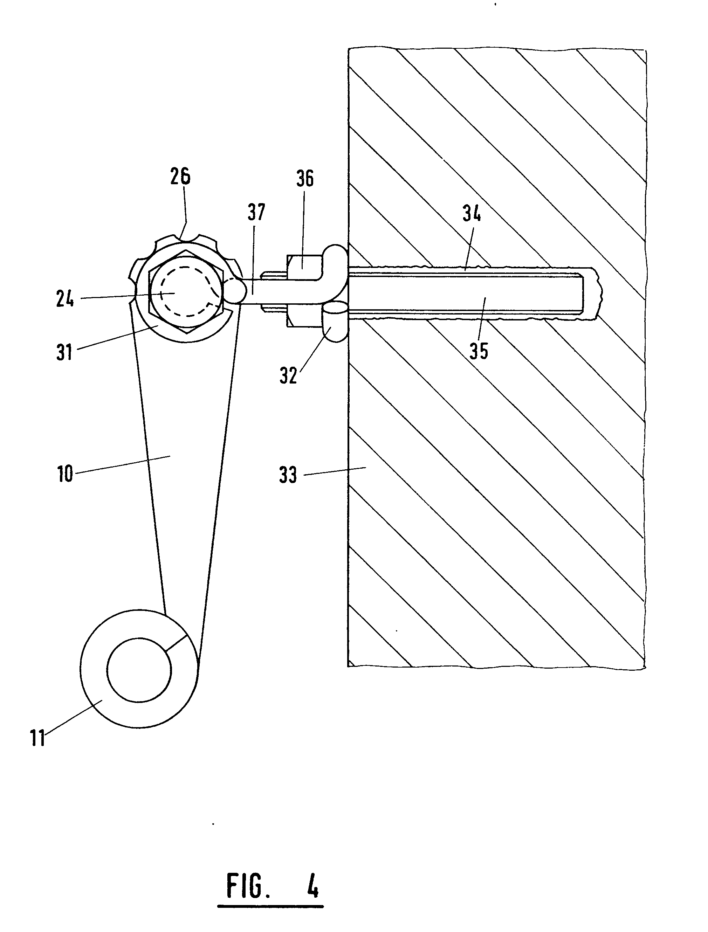

Referring now to Figures 3 and 4 of the drawings, there is shown a second embodiment of holder according to the invention, and parts corresponding with the first embodiment are designated by the same reference numerals, and will not be described in detail again. In this embodiment, the support (which is detachably connected to the end 13 of the fixing portion 10 remote from the resilient helical holder portion 11) comprises a wire support designated generally by reference numeral 30 and having an eyelet at each end, one eyelet 31 fitting over the threaded fastener 24 which pivotally connects the fixing portion 10 to the support 30 and the other eyelet 32 serving to attach the holder to a fixed supporting structure. In the illustrated arrangement, the fixed supporting structure comprises a brick-built tunnel wall

-12-

33 , and a hole 34 is drilled in the wall 33 to accommodate a securing bolt in the form of an anchor bolt 35. The eyelet 32 is fitted on the projecting end of bolt 35, and is secured in position by means of a nut 36. To anchor the bolt 35 in the hole 34, fixing resin is first inserted into the hole 34.

The wire support 30 includes an intermediate portion 37 which extends transversely of the threaded fastener 24 over a distance equal to the required spacing of the holder from the tunnel wall , and end portions which extend perpendicular to the intermediate portion 37 and each of which terminates in a respective one of the eyelets 31 and 32.

The angular orientation of the fixing portion 10 relative to the tunnel wall may be adjusted by engagement of a portion of the wire support 30 in a selected one of the notches 26, in similar manner to the first embodiment.

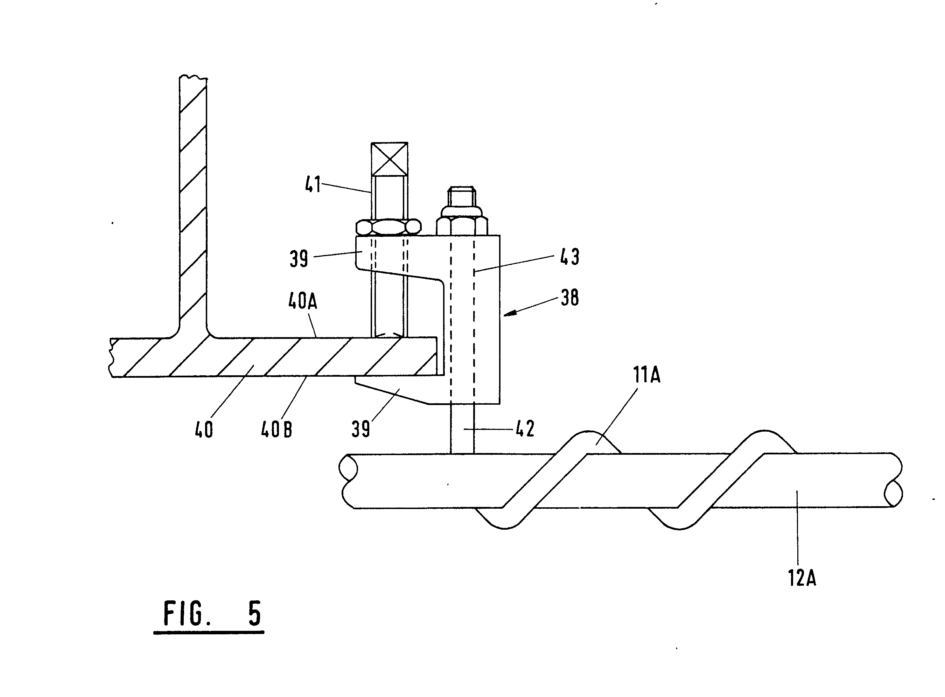

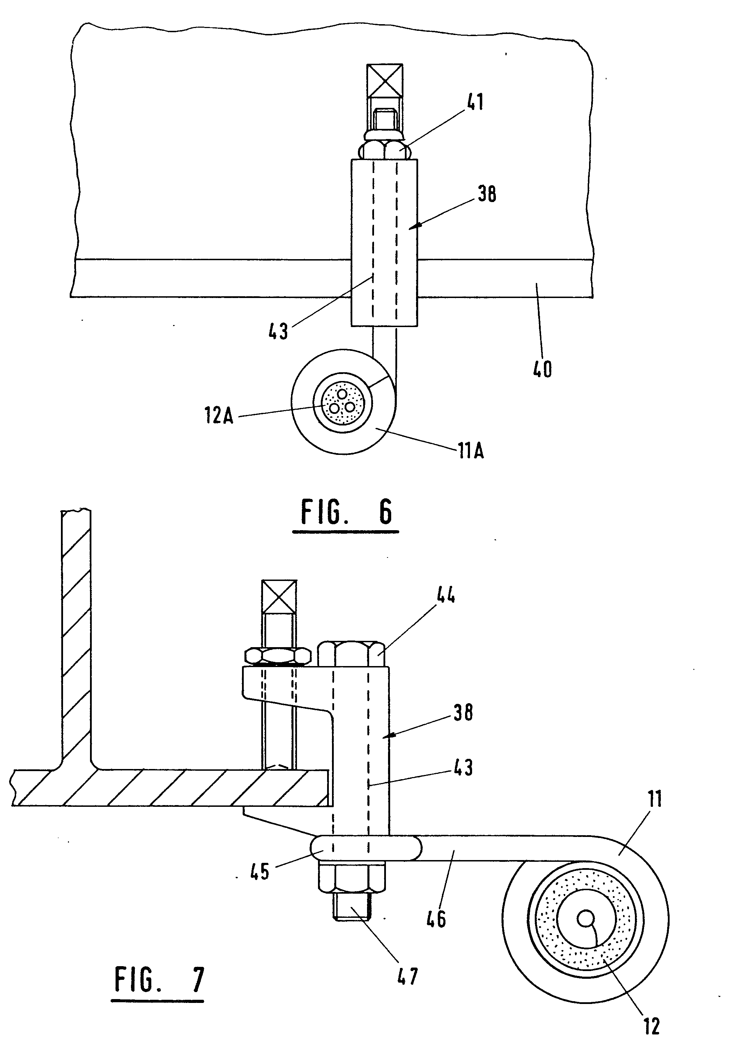

Referring now to Figures 5 and 6, there is shown a third embodiment in which the helical holder portion , designated by reference 11A, is of relatively rigid construction e.g. made of steel. The pitch of the turns of the helical holder portion 11A is sufficient to allow the elongate article to be wound into the helical holder portion. In the illustrated arrangement, the elongate article is a flexible electrical conductor 12A.

Alternatively, when the passage defined by the helix is slightly larger than the cross-section of the elongate article, the latter may be taken axially through the helical holder portion. This would be suitable when, for example, the elongate article is a rigid pipe or conduit.

To enable the third embodiment to be secured to a supporting structure via the flange of a beam e.g. a channel, angle or I-beam, the support comprises a U-shaped clamp 38 having a pair of fixed jaws 39 which embrace flange 40, and a threaded adjuster 41 mounted on one of the jaws and adjustable to engage one side 40A of the flange and to press the other of the jaws into engagement with the other side 40B of the flange.

The fixing portion comprises a radially extending element 42 attached to the helical holder portion 11A, and preferably integral therewith. The element 42 is taken through a passage 43 formed in the base of the U-shaped clamp 38.

In Figures 5 and 6, the elongate article 12A is shown extending generally perpendicular to the longitudinal axis of the flange 40. However, it should be appreciated that the helical holder portion 11A can be adjusted angularly relative to the clamp 38 so as to allow the elongate article to take up any required direction.

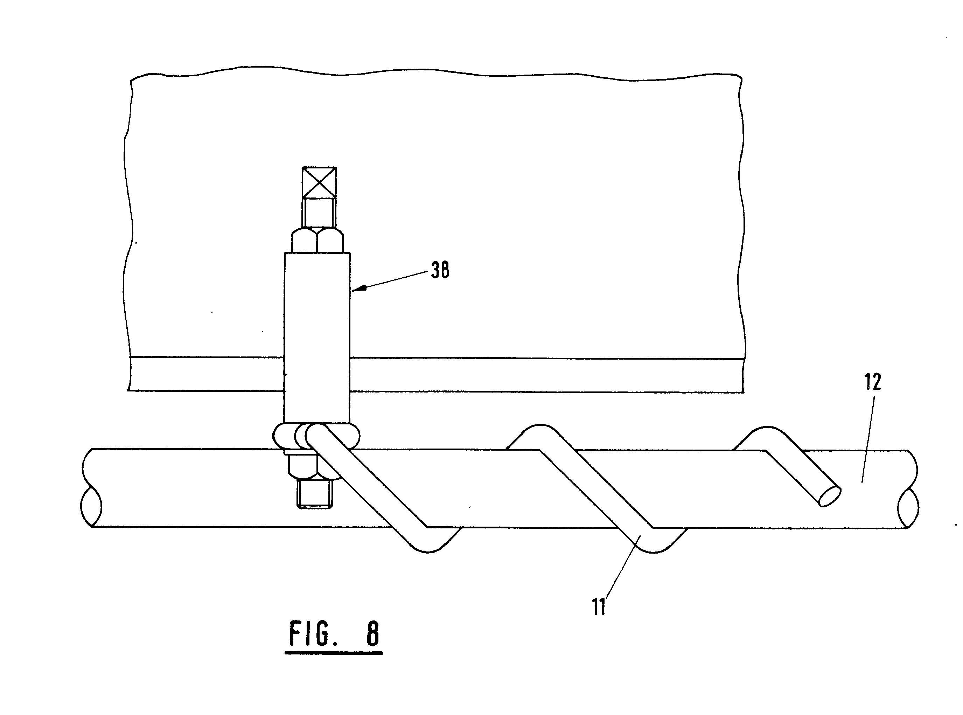

A modification to the third embodiment is shown in Figures 7 and 8, and corresponding parts are designated by the same reference numerals. The helical holder portion, as illustrated, comprises resiliently deformable portion 11. In this modification, the fixing portion comprises a bolt 44 taken through the passage 43 in the clamp 38, and an eyelet 45 formed at an end of a radial extension 46 of the helical holder portion 11 to be secured to a projecting end 47 of the bolt 44.

It will be noted from Figures 7 and 8 that the orientation of the elongate article is at 90$^{\circ}$ to the orientation shown in Figures 5 and 6.

Although the modification shown in Figures 7 and 8 has a resilient helical holder portion 11, the holder portion may be of rigid construction as described above with reference to Figures 5 and 6.

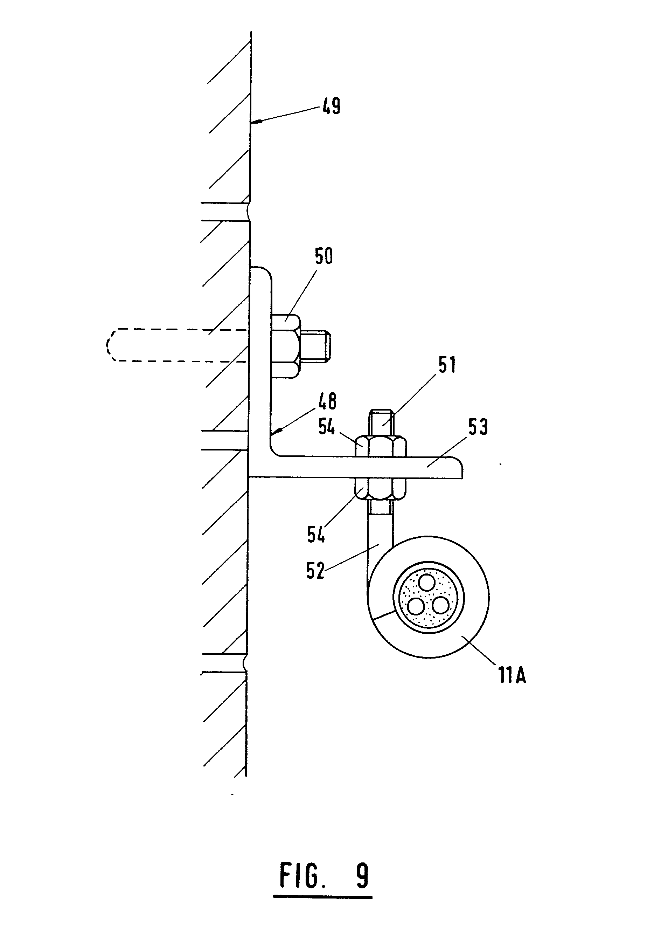

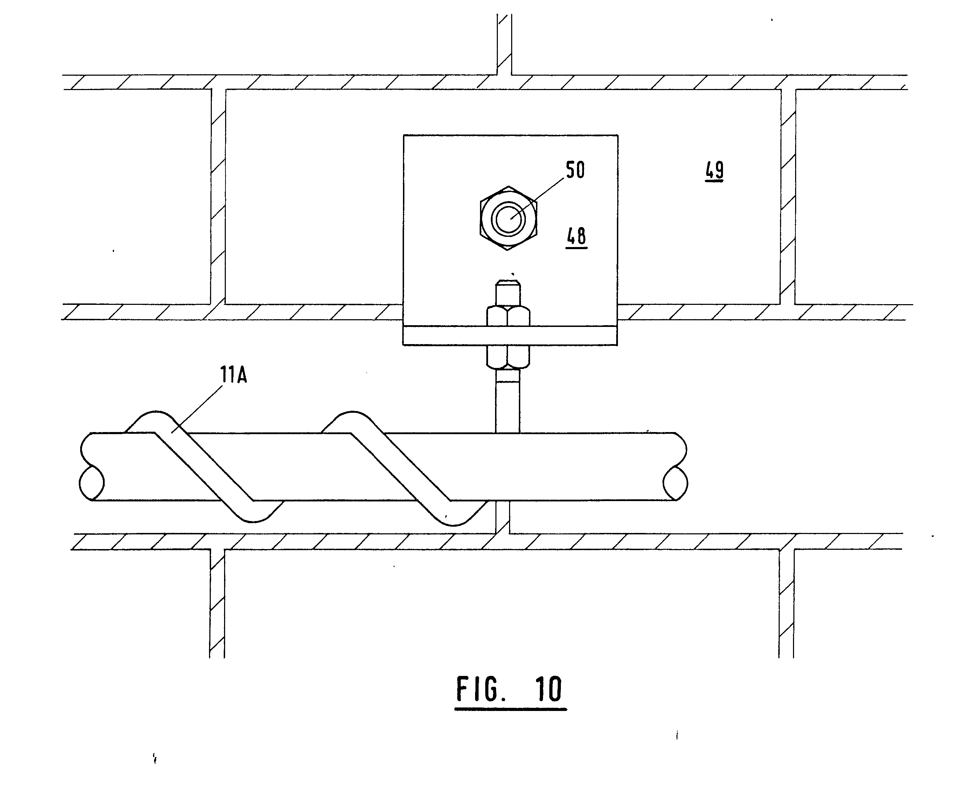

Referring now to Figures 9 and 10, a fourth embodiment of holder is shown, and parts corresponding with the preceding embodiments are designated by the same reference numerals, and will not be described in detail again.

In this embodiment, the support comprises a flanged beam which, as illustrated, takes the form of an angle beam 48. The angle serves to secure the holder to a supporting structure which comprises the brickwork 49 of a tunnel wall. The angle is secured to the tunnel wall via a resin anchor bolt 50 , in similar manner to the attachment of the support 30 in Figures 3 and 4.

The fixing portion comprises a threaded end 51 of a radial extension 52 of the helical holder portion 11A. The threaded end 51 is taken through a hole in a flange 53 of the angle beam 48 ,and is secured by nuts 54 provided one on each side of the flange.53.

-15-

CLAIMS

1.      A holder for an elongate article comprising a fixing portion by means of which the holder may be attached to a supporting structure, and a holder portion for the elongate article , characterised in that said holder portion (11,11A) is formed in the shape of a helix through which the elongate article (12) can extend to be held thereby.

2.      A holder according to claim 1, characterised in that the holder portion (11) is resiliently deformable to enable the holder portion to be wrapped around the circumference of the elongate article (12), and subsequently, by its own inherent resilience, to revert or tend to revert to its original helical shape in order to hold and support the elongate article therein.

3.      A holder according to claim 2, characterised in that the holder portion (11) is made of plastics material.

4.      A holder according to claim 3, characterised in that the fixing portion (10) extends generally radially of the holder portion (11) and, at its end (13) remote from the holder portion, is adapted for securement to a supporting structure in order to space an elongate article from the supporting structure.

5.      A holder according to any one of the preceding claims, characterised in that the fixing portion (10) is made of the same material as the holder portion(11), and they are formed in one piece.

6.      A holder according to any one of the preceding claims, characterised in that a separate support (18) is detachably connected to the holder and is U-shaped in
construction so as to embrace therebetween a projecting
portion (15) of a supporting structure, the limbs (19,20)
of the support being resiliently displaceable away from each
other to allow the support (18) to be fitted over the
projecting portion 15 and subsequently springing back
towards the initial configuration in order to grip the
portion (15) of the supporting structure therebetween.

7.      A holder according to claim 6, characterised in
that an eyelet (22) is provided on the support (18)
which is positioned and dimensioned so as to fit over the
head (16) or the nut of a bolt which is provided on said
projecting portion (15) of the supporting structure.

8.      A holder according to claims 6 or 7 , characterised
in that the fixing portion (10) is pivotally connected to
said support (18) so as to vary the inclination of the
fixing portion (10) relative to the support (18).

9.      A holder according to claim 8, characterised in

the pivotal connection comprises a threaded fastener
(24) taken through an end (13) of the fixing portion (10)
remote from the helical holder portion (11) and through an
eyelet (23) formed in the web (21) of the U-shaped
configuration of the support (18).

10.      A holder according to claim 9, characterised in
that a series of peripherally spaced notches (26) are
provided at said remote end (13) of the fixing portion
(10), into which can be received adjustably a part of said
web (21) so as to lock the fixing portion (10) in any
desired position.

11.      A holder according to any one of claims 1 to 5, characterised in that a separate support is detachably connected to the holder by means of a threaded fastener (24) pivotally connecting said fixing portion (10) to said support, said support comprising a wire support (30) having an eyelet (31,32) at each end, one eyelet (31) fitting over said threaded fastener (24) and the other eyelet (32) serving to attach the holder to a supporting structure.

12.      A holder according to claim 11, and fixed in position on a wall, characterised in that a securing bolt (35) is anchored in a resin filled hole (34) formed in said wall, and said other eyelet (32) is fitted on said bolt.

13.      A holder according to claim 11 or 12, characterised in that the wire support (30) includes an intermediate portion (37) which extends transversely of the threaded fastener (24) over a distance equal to the required spacing of the holder from the supporting structure, and end portions which extend perpendicular to the intermediate portion and each of which terminates in a respective eyelet (31,32).

14.      A holder according to any one of claims 1 to 5, characterised in that a separate support is detachably connected  to the holder and comprises a U-shaped clamp (38) having a pair of fixed jaws (39) to embrace therebetween a flange (40) of a supporting structure, and a threaded adjuster (41) mounted on one of the jaws and adjustable to engage one side of the flange and to press the other of the jaws into engagement with the other side of the flange.

15.      A holder according to claim 14, characterised in that the fixing portion comprises a radially extending element (42) attached to said helical holder portion (11A), the element (42) being taken through a passage formed in the base of said U-shaped clamp (38).

16.     A holder according to claim 14, characterised in that the fixing portion comprises a holt (44) taken through a passage formed in the base of the U-shaped clamp (38), and an eyelet (45) formed at an end of a radial extension of the helical holder portion (11) to be secured to a projecting end (47) of said bolt (44).

17.     A holder according to any one of claims 14 to 16, characterised in that the helical holder portion (11,11A) is of rigid construction, or is resiliently deformable.

18.     A holder according to any one of claims 1 to 5, characterised in that a separate support is detachably connected to the holder and comprises a beam (48) which is securable to a wall via a resin anchored bolt (50) and in that the fixing portion comprises a threaded end (51) of a radial extension (52)  of said helical holder portion, which is taken through a flange (53) of said beam and is secured by nuts (54) on each side of said flange.

0030420

FIG. 1

0030420

15

16

22

19

26

10

11

FIG. 2

FIG. 3

FIG. 4

FIG. 5

0030420

FIG. 6

FIG. 7

FIG. 8

FIG. 9

0030420

49

50

48

11A

FIG. 10

# EUROPEAN SEARCH REPORT

European Patent Office

0030420

Application number

EP 80 30 4017

## DOCUMENTS CONSIDERED TO BE RELEVANT

| Category | Citation of document with indication, where appropriate, of relevant passages | Relevant to claim |
|---|---|---|
| X | FR - A - 2 242 795 (UNITED CARR)<br>* Page 1, lines 15-21; page 2, lines 10-37; page 3, lines 2-10; figures 3-5 *<br>& GB - A - 1 474 901<br>-- | 1-5, 7 |
| X | US - A - 1 595 728 (PLEISTER)<br>* Page 1, lines 1-4; page 2, lines 11-50, 71-91; figures 5,7,8,10 *<br>-- | 1,4,5, 17 |
|  | GB - A - 1 039 646 (TINNERMAN)<br>* Page 2, lines 41-68; page 3, lines 3-21, 55-58; figures 3-6 *<br>-- | 1,6, 14-16 |
|  | FR - A - 2 370 375 (INVENTIO)<br>* Page 5, lines 1-27; figure 2 *<br>-- | 1,6, 14-16 |
|  | DE - A - 2 304 096 (NIEDAX)<br>* Page 7, paragraphs 1,2; figure 1 *<br>-- | 1,11 18 |
|  | DE - A - 2 718 216 (GROSS)<br>* Page 6, last paragraph; figure 4 *<br>---- | 1,11 18 |

### CLASSIFICATION OF THE APPLICATION (Int. Cl.³)

H 02 G 3/24

### TECHNICAL FIELDS SEARCHED (Int. Cl.³)

H 02 G 3/26
       3/24
F 16 L 3/12
       3/10

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 03-03-1981 | TIELEMANS |

EPO Form 1503.1  06.78